(19)

Europäisches
Patentamt
European
Patent Office
Office européen
des brevets

(11) **EP 4 391 358 A1**

(12) **EUROPEAN PATENT APPLICATION**
published in accordance with Art. 153(4) EPC

(43) Date of publication:
**26.06.2024  Bulletin 2024/26**

(21) Application number: **22866499.1**

(22) Date of filing: **31.08.2022**

(51) International Patent Classification (IPC):
**H02P 29/024** (2016.01)   **H02P 21/00** (2016.01)
**H02P 29/028** (2016.01)

(52) Cooperative Patent Classification (CPC):
**H02P 21/00; H02P 21/22; H02P 29/024;**
**H02P 29/028**

(86) International application number:
**PCT/CN2022/116211**

(87) International publication number:
**WO 2023/036035 (16.03.2023 Gazette 2023/11)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **07.09.2021   CN 202111047204**

(71) Applicant: **Bosch Huayu Steering Systems Co.,**
**Ltd.**
**Shanghai 201821 (CN)**

(72) Inventors:
 • **ZHAI, Yu**
   **Shanghai 201821 (CN)**

 • **ZHAO, Yu**
   **Shanghai 201821 (CN)**
 • **LI, Shuo**
   **Shanghai 201821 (CN)**
 • **YU, Zhigang**
   **Shanghai 201821 (CN)**
 • **DIAO, Guoliang**
   **Shanghai 201821 (CN)**

(74) Representative: **Hannke, Christian**
**Hannke Bittner & Partner**
**Patent- und Rechtsanwälte mbB**
**Prüfeninger Straße 1**
**93049 Regensburg (DE)**

(54) **METHOD FOR ACHIEVING MOTOR CONTROL IN OPEN-PHASE CONDITION**

(57)    Provided is a method for achieving motor control in an open-phase condition, comprising: collecting a three-phase current and a duty cycle signal; calculating a d-axis demand current, a q-axis demand current, a d-axis feedback current, and a q-axis feedback current of a motor according to the current rotating speed, a demand torque, and a bus voltage of the motor; and performing open-phase diagnosis according to the d-axis demand current, the q-axis demand current, the d-axis feedback current, the q-axis feedback current, and the duty cycle signal, thereby achieving the motor control in the open-phase condition.

Figure 2

EP 4 391 358 A1

**Description**

This application claims the priority of Chinese Patent Application No. 202111047204.7, filed on September 7, 2021. This application cites the full text of the above Chinese patent application.

**FIELD OF THE INVENTION**

The invention relates to the field of motor control technology, specifically a method of achieving motor control in an open-phase condition.

**BACKGROUND**

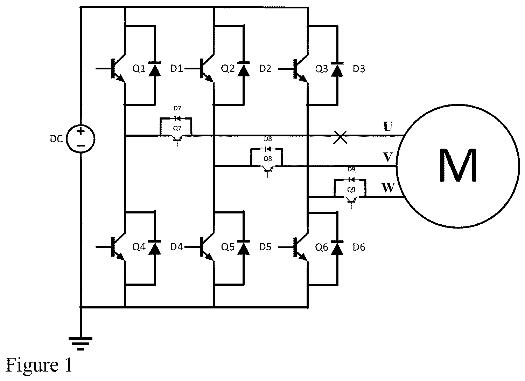

In recent years, permanent magnet synchronous motor has been widely used due to its characteristic of high efficiency and compact structure. In the field of electronic power steering, the safety performance of the system is a very important indicator, and the fault-tolerant operation of the core component, the motor, has also become a research hotspot.
As shown in Figure 1, open-phase refers to when mechanical or electrical faults in one phase of the motor (such as U-phase, V-phase, W-phase) or one phase bridge arm of the inverter (such as Q1D1, Q2D2, Q3D3, Q4D4, Q5D5, and Q6D6), which causes the motor control system cannot operate normally, the disconnection of MOSFET field-effect transistors (such as Q7D7, Q8D8, and Q9D9) in order to achieve electrical isolation.
Nowadays, most strategies adopt the method of changing the inverter topology to realize phase loss control, such as the three-phase four bridge arm structure. However, this method requires the use of a special motor to lead out its center point, and also requires modifying the ordinary three-phase six topology inverter structure to a four phase eight topology inverter structure, which increases the cost.
Therefore, it is necessary to design a method of achieving motor control in open-phase condition, in a permanent magnet synchronous motor, without modifying the structure of the motor and controller, to realize phase loss control, thereby improve the safety of the electronic power steering system.

**SUMMARY**

The purpose of the invention is to overcome the shortcomings of existing technology and provide a method of achieving motor control in an open-phase condition, in the case of phase loss in a permanent magnet synchronous motor, without modifying the structure of the motor and controller, to realize phase loss control, thereby improve the safety of the electronic power steering system.
To realize the above purpose, the invention provides a method of achieving motor control in an open-phase condition, wherein the method comprising following steps: step 1, collecting a three-phase current and a duty cycle signal, calculating a d-axis demand current $i_{dref}$, a q-axis demand current $i_{qref}$, a d-axis feedback current $i_{dfed}$, a q-axis feedback current $i_{qfed}$ of a motor according to the present rotating speed, a demand torque, and a bus voltage of the motor; step 2, if the difference between the d-axis demand current $i_{dref}$ and the d-axis feedback current $i_{dfed}$, or the difference between the q-axis demand current $i_{qref}$ and the q-axis feedback current $i_{qfed}$, is greater than 5A (the specific values vary according to different systems) , it is judged that the EPS system is in a phase loss state, and continuing with step 3, if the difference between the d-axis demand current $i_{dref}$ and the d-axis feedback current $i_{dfed}$, or the difference between the q-axis demand current $i_{qref}$ and the q-axis feedback current $i_{qfed}$ is less than or equal to 4A (the specific values vary according to different systems), it is judged that the EPS system is not in a phase loss state, and directly outputting the d-axis demand current $i_{dref}$, q-axis demand current $i_{qref}$; step 3, cutting off the phase separation MOSFET field-effect transistor and calculating the d-axis demand current $i_{dref}$, demand phase current $i_{sref}$ of the motor according to the q-axis demand current $i_{qref}$ and motor rotor electrical angle; step 4, if the demand phase current $i_{sref}$ is greater than an allowable maximum phase current, and continue with step 5, if the demand phase current $i_{sref}$ is less than or equal to the allowable maximum phase current, directly outputting the d-axis demand current $i_{dref}$ and q-axis demand current $i_{qref}$; step 5, calculating the present d-axis demand current $i_{dref}$ and q-axis demand current $i_{qref}$; step 6, calculating a d-axis reference voltage $U_{dref}$ and a q-axis reference voltage $U_{qref}$ according to the d-axis demand current $i_{dref}$, q-axis demand current $i_{qref}$, and d-axis feedback current $i_{dfed}$, q-axis feedback current $i_{qfed}$, if the EPS system is in a phase loss state, confirming the faulty phase by a three-phase current sampling value, setting the current of the faulty phase to 0, recalculating the d-axis feedback current $i_{dfed}$ and q-axis feedback current $i_{qfed}$, and eliminating the influence of sampling; step 7, calculating alpha axis reference voltage $U_{\alpha ref}$ and beta axis reference voltage $U_{\beta ref}$; step 8, calculating U-phase duty cycle *DutyU*, V-phase duty cycle *DutyV*, and W-phase duty cycle *DutyW*; if the EPS system is in a phase loss state, ensuring that the faulty phase power device has no switching action; step 9, controlling the motor operation based on the U-phase duty cycle *DutyU*, V-phase duty cycle *DutyV*, and W-phase duty cycle *DutyW*.
The formulas for calculating the d-axis demand current $i_{dref}$, q-axis demand current $i_{qref}$, d-axis feedback current

$i_{dfed}$, and q-axis feedback current $i_{qfed}$ of the motor are:

$$\begin{cases} b = \dfrac{2 \times R_s \times w_e \times i_q \times (L_d - L_q) + 2 \times w_e^2 \times \phi_f \times L_d}{R_s^2 + w_e^2 \times L_d^2} \\[3mm] c = \dfrac{(R_s^2 + w_e^2 \times L_q^2) \times i_q^2 + 2 \times R_s \times w_e \times i_q \times \phi_f + w_e^2 \times \phi_f^2 - U_{lim}^2}{R_s^2 + w_e^2 \times L_d^2} \\[3mm] i_{dref} = \dfrac{-b + \sqrt{b^2 - 4 \times c}}{2} \\[3mm] i_{qref} = \dfrac{2 \times T_e}{3 \times p_n \times (\phi_f + (L_d - L_q) \times i_d)} \end{cases},$$

$$\begin{cases} i_{dfed} = (i_u \times \cos\theta + i_v \times \cos(\theta - \frac{2}{3}\pi) + i_w \times \cos(\theta + \frac{2}{3}\pi)) \times \frac{2}{3} \\[3mm] i_{qfed} = (-i_u \times \sin\theta + i_v \times \sin(\theta - \frac{2}{3}\pi) + i_w \times \sin(\theta + \frac{2}{3}\pi)) \times \frac{2}{3} \end{cases}, \text{ among them,}$$

$R_s$ is the motor phase resistance, $w_e$ is the motor electrical angular frequency, $i_q$ is the motor q-axis current, $L_d$ is the motor d-axis inductance, $L_q$ is the motor q-axis inductance, $\varphi_f$ is the permanent magnet rotor magnetic flux, $U_{lim}$ is the voltage circle limit value, $T_e$ is the motor demand output torque , $p_n$ is the number of motor poles, $i_d$ is the motor d-axis current, $i_u$ is the motor U-phase collected current, $i_v$ is the motor V-phase collected current, $i_w$ is the motor W-phase collected current, and $\theta$ is the rotor electrical angle.

The formulas for calculating the d-axis demand current $i_{dref}$, q-axis demand current $i_{qref}$, and demand phase

$$\begin{cases} i_{dref} = i_{qref} \times \tan\theta \\[2mm] i_{qref} = i_{qref} \\[2mm] i_{sref} = i_{dref} \times \cos(\theta + \frac{2}{3}\pi) - i_{qref} \times \sin(\theta + \frac{2}{3}\pi) \end{cases}$$

current $i_{sref}$ of the motor are : , among them, $\theta$ is the rotor electrical angle.

The formulas for calculating the present d-axis demand current $i_{dref}$ and q-axis demand current $i_{qref}$ are :

$$\begin{cases} i_{qref} = \frac{2}{3} \times \frac{i_{smax}^2}{i_{qref}} \times (1 + \cos(2\theta)) \\[3mm] i_{dref} = \frac{2}{3} \times \frac{i_{smax}^2}{i_{qref}} \times \sin(2\theta) \end{cases}$$

, among them, $i_{smax}$ is maximum value of motor phase current, $\theta$ is the rotor electrical angle.

The formulas for calculating the d-axis reference voltage $U_{dref}$ and q-axis reference voltage $i_{qref}$ are :

$$\begin{cases} U_{dref} = K_{pd} \times (I_{dref} - I_{dfed}) + \int K_{id} \times (I_{dref} - I_{dfed}) \\[2mm] U_{qref} = K_{pq} \times (I_{qref} - I_{qfed}) + \int K_{iq} \times (I_{qref} - I_{qfed}) \end{cases}$$

, among them, $K_{pd}$ is the d-axis scaling coefficient, $K_{id}$ is the d-axis integration coefficient, $K_{pq}$ is the q-axis scaling coefficient, $K_{iq}$ is the q-axis integration coefficient.

The formula for calculating the alpha axis reference voltage and beta axis reference voltage are :

$$\begin{cases} U_{\alpha ref} = U_{dref} \times \cos\theta - U_{qref} \times \sin\theta \\[2mm] U_{\beta ref} = U_{dref} \times \sin\theta + U_{qref} \times \cos\theta \end{cases}$$

, among them, $\theta$ is the rotor electrical angle.

The formulas for calculating the U-phase duty cycle *DutyU*, V-phase duty cycle *DutyV*, and W-phase duty cycle

$$\begin{cases} U_U = U_{\alpha ref} \\ U_V = -\dfrac{U_{\alpha ref}}{2} + \dfrac{\sqrt{3}}{2} \times U_{\beta ref} \\ U_W = -\dfrac{U_{\alpha ref}}{2} - \dfrac{\sqrt{3}}{2} \times U_{\beta ref} \\ U_{com} = \dfrac{max(U_U,U_V,U_W)+min(U_U,U_V,U_W)}{2} \end{cases} , \quad \begin{cases} DutyU = \dfrac{U_U-U_{com}}{U_{max}} + 0.5 \\ DutyV = \dfrac{U_V-U_{com}}{U_{max}} + 0.5 \\ DutyW = \dfrac{U_W-U_{com}}{U_{max}} + 0.5 \end{cases}$$

$DutyW$ are , among them, $U_{max}$ is the maximum value of the voltage vector.

Compared with existing technology, the invention designs method of achieving motor control in an open-phase condition, determining whether there is a phase loss by the demand current and feedback current, if a phase loss occurs, calculate the motor control information such as feedback current, reference voltage, and three-phase duty cycle, and without modifying the structure of the motor and controller, the purpose of phase loss control is realized, thereby improving the safety of the electronic power steering system, to ensure that the system can provide assistance and avoid danger in the event of a open-phase.

## DESCRIPTION OF FIGURES

Figure 1 is a diagram of the phase loss topology of a permanent magnet synchronous motor in existing technology.
Figure 2 is a flowchart for calculating the demand current of a permanent magnet synchronous motor in the invention.
Figure 3 is a control flowchart of a permanent magnet synchronous motor in the invention.

## DETAILED DESCRIPTION OF THE PREFERRED EMBODIMENT

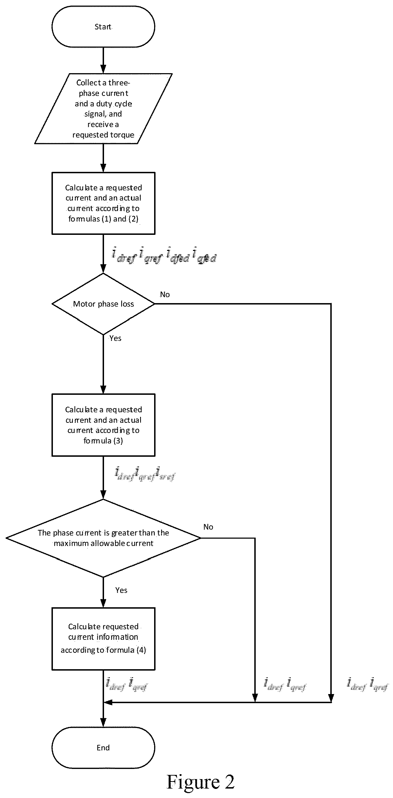

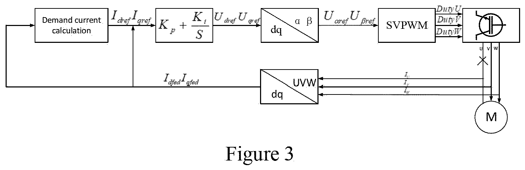

Further description of the present invention is provided in conjunction with the accompanying drawings.
Refer to Figures 2 and 3, the invention provides a method of achieving motor control in an open-phase condition, wherein the method comprising following steps:
Step 1, collecting three-phase current and duty cycle signals, calculating the d-axis demand current $i_{dref}$, the q-axis demand current $i_{qref}$, d-axis feedback current $i_{dfed}$, q-axis feedback current $i_{qfed}$ of the motor according to the present rotating speed, demand torque, and bus voltage of the motor.
Among them, the motor comprises the d-axis, q-axis, alpha axis, and beta axis. The three-phase current comprises the motor U-phase collected current, the motor V-phase collected current, and the motor W-phase collected current.
The formulas for calculating the d-axis demand current $i_{dref}$, q-axis demand current $i_{qref}$, d-axis feedback current $i_{dfed}$, and q-axis feedback current $i_{qfed}$ of the motor are:

$$\begin{cases} b = \dfrac{2\times R_s\times w_e\times i_q\times (L_d-L_q)+2\times w_e^2\times \phi_f\times L_d}{R_s^2+w_e^2\times L_d^2} \\ c = \dfrac{(R_s^2+w_e^2\times L_q^2)\times i_q^2+2\times R_s\times w_e\times i_q\times \phi_f+w_e^2\times \phi_f^2-U_{lim}^2}{R_s^2+w_e^2\times L_d^2} \\ i_{dref} = \dfrac{-b+\sqrt{b^2-4\times c}}{2} \\ i_{qref} = \dfrac{2\times T_e}{3\times p_n\times (\phi_f+(L_d-L_q)\times i_d)} \end{cases} ,$$

$$\begin{cases} i_{dfed} = (i_u \times cos\,\theta + i_v \times cos(\theta - \frac{2}{3}\pi) + i_w \times cos(\theta + \frac{2}{3}\pi)) \times \frac{2}{3} \\ i_{qfed} = (-i_u \times sin\,\theta + i_v \times sin(\theta - \frac{2}{3}\pi) + i_w \times sin(\theta + \frac{2}{3}\pi)) \times \frac{2}{3} \end{cases}$$

, among them, $R_s$ is the motor phase resistance, $w_e$ is the motor electrical angular frequency, $i_q$ is the motor q-axis current, $L_d$ is the motor d-axis inductance, $L_q$ is the motor q-axis inductance, $\varphi_f$ is the permanent magnet rotor magnetic flux, $U_{\lim}$ is the voltage circle limit value, $T_e$ is the motor demand output torque, $p_n$ is the number of motor poles, $i_d$ is the motor d-axis current, $i_u$ is the motor U-phase collected current, $i_v$ is the motor V-phase collected current, $i_w$ is the motor W-phase collected current, and $\theta$ is the rotor electrical angle.

Step 2, if the difference between the d-axis demand current $i_{dref}$ and the d-axis feedback current $i_{dfed}$, or the difference between the q-axis demand current $i_{qref}$ and the q-axis feedback current $i_{qfed}$, is greater than 5A (the specific values vary according to different systems) , it is judged that the EPS system is in a phase loss state, and continuing with step 3, if the difference between the d-axis demand current $i_{dref}$ and the d-axis feedback current $i_{dfed}$, or the difference between the q-axis demand current $i_{qref}$ and the q-axis feedback current $i_{qfed}$ is less than or equal to 4A (the specific values vary according to different systems), it is judged that the EPS system is not in a phase loss state, and directly outputting the d-axis demand current $i_{dref}$, q-axis demand current $i_{qref}$.

If the difference between the d-axis demand current $i_{dref}$ and the d-axis feedback current $i_{dfed}$, or the difference between the q-axis demand current $i_{qref}$ and the q-axis feedback current $i_{qfed}$ is greater than 4A and less than or equal to 5A, the previous cycle state remains unchanged.

Step 3, cutting off the phase separation MOSFET field-effect transistor and calculating the d-axis demand current $i_{dref}$, q-axis demand current $i_{qref}$, and demand phase current $i_{sref}$ of the motor according to the q-axis demand current $i_{qref}$ and motor rotor electrical angle.

Among them, the demand phase current represents the maximum current that the motor can output.

The formulas for calculating the d-axis demand current $i_{dref}$, q-axis demand current $i_{qref}$, and demand phase

$$\begin{cases} i_{dref} = i_{qref} \times tan\,\theta \\ i_{qref} = i_{qref} \\ i_{sref} = i_{dref} \times cos(\theta + \frac{2}{3}\pi) - i_{qref} \times sin(\theta + \frac{2}{3}\pi) \end{cases}$$

current $i_{sref}$ of the motor are : , among them, $\theta$ is the rotor electrical angle.

Step 4, if the demand phase current $i_{sref}$ is greater than the allowable maximum phase current, and continuing with step 5, if the demand phase current $i_{sref}$ is less than or equal to the allowable maximum phase current, directly outputting the d-axis demand current $i_{dref}$ and q-axis demand current $i_{qref}$.

Step 5, calculating the present d-axis demand current $i_{dref}$ and q-axis demand current $i_{qref}$.

The formulas for calculating the present d-axis demand current $i_{dref}$ and q-axis demand current $i_{qref}$ are :

$$\begin{cases} i_{qref} = \frac{2}{3} \times \frac{i_{smax}^2}{i_{qref}} \times (1 + cos\,(2\theta)) \\ i_{dref} = \frac{2}{3} \times \frac{i_{smax}^2}{i_{qref}} \times sin\,(2\theta) \end{cases}$$

, among them, $i_{smax}$ is maximum value of motor phase current, $\theta$ is the rotor electrical angle.

Step 6, calculating the d-axis reference voltage $U_{dref}$ and q-axis reference voltage $U_{qref}$ according to the d-axis demand current $i_{dref}$, q-axis demand current $i_{qref}$, and d-axis feedback current $i_{dfed}$, q-axis feedback current $i_{qfed}$, if the EPS system is in a phase loss state, setting the current of the faulty phase to 0, recalculating the d-axis feedback current $i_{dfed}$ and q-axis feedback current $i_{qfed}$, and eliminating the influence of sampling, the calculation method is consistent with step 1.

The formulas for calculating the d-axis reference voltage $U_{dref}$ and q-axis reference voltage $i_{qref}$ are :

$$\begin{cases} U_{dref} = K_{pd} \times (I_{dref} - I_{dfed}) + \int K_{id} \times (I_{dref} - I_{dfed}) \\ U_{qref} = K_{pq} \times (I_{qref} - I_{qfed}) + \int K_{iq} \times (I_{qref} - I_{qfed}) \end{cases}$$

, among them, $K_{pd}$ is the d-axis scaling coefficient, $K_{id}$ is the d-axis integration coefficient, $K_{pq}$ is the q-axis scaling coefficient, $K_{iq}$ is the q-axis integration coefficient.

Step 7, calculating alpha axis reference voltage $U_{\alpha ref}$ and beta axis reference voltage $U_{\beta ref}$.

The formulas for calculating the alpha axis reference voltage and beta axis reference voltage are:

$$\begin{cases} U_{\alpha ref} = U_{dref} \times \cos\theta - U_{qref} \times \sin\theta \\ U_{\beta ref} = U_{dref} \times \sin\theta + U_{qref} \times \cos\theta \end{cases}$$ , among them, $\theta$ is the rotor electrical angle.

Step 8, calculating the U-phase duty cycle *DutyU*, V-phase duty cycle *DutyV*, and W-phase duty cycle *DutyW*, if the EPS system is in a phase loss state, ensuring that the faulty phase power device has no switching action.

The formulas for calculating the U-phase duty cycle *DutyU*, V-phase duty cycle *DutyV*, and W-phase duty cycle

$$\begin{cases} U_U = U_{\alpha ref} \\ U_V = -\dfrac{U_{\alpha ref}}{2} + \dfrac{\sqrt{3}}{2} \times U_{\beta ref} \\ U_W = -\dfrac{U_{\alpha ref}}{2} - \dfrac{\sqrt{3}}{2} \times U_{\beta ref} \\ U_{com} = \dfrac{max(U_U, U_V, U_W) + min(U_U, U_V, U_W)}{2} \end{cases} , \quad \begin{cases} DutyU = \dfrac{U_U - U_{com}}{U_{max}} + 0.5 \\ DutyV = \dfrac{U_V - U_{com}}{U_{max}} + 0.5 \\ DutyW = \dfrac{U_W - U_{com}}{U_{max}} + 0.5 \end{cases}$$

*DutyW* are , among them, $U_{max}$ is the maximum value of the voltage vector.

Step 9, controlling the motor operation based on the U-phase duty cycle *DutyU*, V-phase duty cycle *DutyV*, and W-phase duty cycle *DutyW*.

In the embodiment of the invention, it's designed method of achieving motor control in an open-phase condition, determining whether there is a phase loss by the demand current and feedback current, if a phase loss occurs, calculate the motor control information such as feedback current, reference voltage, and three-phase duty cycle, and without modifying the structure of the motor and controller, the purpose of phase loss control is realized, thereby improving the safety of the electronic power steering system, to ensure that the system can provide assistance and avoid danger in the event of an open-phase.

Although the specific embodiments of the present invention have been described above, those skilled in the art should understand that these are only examples, and multiple changes or modifications can be made to these embodiments without departing from the principles and essence of the present invention. Therefore, the scope of protection of the present invention is limited by the attached claims.

**Claims**

1. A method of achieving motor control in an open-phase condition, wherein the method comprising following steps: step 1, collecting a three-phase current and a duty cycle signal, calculating a d-axis demand current $i_{dref}$, a q-axis demand current $i_{qref}$, a d-axis feedback current $i_{dfed}$, a q-axis feedback current $i_{qfed}$ of the motor according to the present rotating speed, a demand torque, and a bus voltage of the motor; step 2, if the difference between the d-axis demand current $i_{dref}$ and the d-axis feedback current $i_{dfed}$, or the difference between the q-axis demand current $i_{qref}$ and the q-axis feedback current $i_{qfed}$, is greater than 5A, it is judged that the EPS system is in a phase loss state, and continuing with step 3, if the difference between the d-axis demand current $i_{dref}$ and the d-axis feedback current $i_{dfed}$, or the difference between the q-axis demand current $i_{qref}$ and the q-axis feedback current $i_{qfed}$ is less than or equal to 4A, it is judged that the EPS system is not in a phase loss state, and directly outputting the d-axis demand current $i_{dref}$, q-axis demand current $i_{qref}$; step 3, cutting off a phase separation MOSFET field-effect transistor and calculating the d-axis demand current $i_{dref}$, the q-axis demand current $i_{qref}$, and a demand phase current $i_{sref}$ of the motor according to the q-axis demand current $i_{qref}$ and motor rotor electrical angle; step 4, if the demand phase current $i_{sref}$ is greater than an allowable maximum phase current, and continuing with step 5, if the demand phase current $i_{sref}$ is less than or equal to the allowable maximum phase current, directly outputting the d-axis demand current $i_{dref}$ and the q-axis demand current $i_{qref}$; step 5, calculating present d-axis demand current $i_{dref}$ and q-axis demand current $i_{qref}$; step 6, calculating a d-axis reference voltage $U_{dref}$ and a q-axis reference voltage $U_{qref}$ according to the d-axis demand current $i_{dref}$, q-axis demand current $i_{qref}$, and d-axis feedback current $i_{dfed}$, q-axis feedback current $i_{qfed}$, if the EPS system is in a phase loss state, setting a current of a faulty phase to 0, recalculating the d-axis feedback current $i_{dfed}$ and the q-axis feedback current $i_{qfed}$, and eliminating an influence of sampling; step 7, calculating an alpha axis reference voltage $U_{\alpha ref}$ and a beta axis reference voltage $U_{\beta ref}$; step 8, calculating a U-phase duty cycle *DutyU*, a V-phase duty cycle *DutyV*, and a W-phase duty cycle *DutyW*; if the EPS system is in a phase loss state, ensuring that a faulty phase power device has no switching action; step 9, controlling the motor operation based on the U-phase duty cycle *DutyU*, V-phase duty cycle *DutyV*, and W-phase duty cycle *DutyW*.

2. The method of achieving motor control in an open-phase condition of claim 1, wherein formulas for calculating the d-axis demand current $i_{dref}$, the q-axis demand current $i_{qref}$, the d-axis feedback current $i_{dfed}$, the q-axis feedback current $i_{qfed}$ of the motor are :

$$\begin{cases} b = \dfrac{2 \times R_s \times w_e \times i_q \times (L_d - L_q) + 2 \times w_e^2 \times \phi_f \times L_d}{R_s^2 + w_e^2 \times L_d^2} \\ c = \dfrac{(R_s^2 + w_e^2 \times L_q^2) \times i_q^2 + 2 \times R_s \times w_e \times i_q \times \phi_f + w_e^2 \times \phi_f^2 - U_{lim}^2}{R_s^2 + w_e^2 \times L_d^2} \\ i_{dref} = \dfrac{-b + \sqrt{b^2 - 4 \times c}}{2} \\ i_{qref} = \dfrac{2 \times T_e}{3 \times p_n \times (\phi_f + (L_d - L_q) \times i_d)} \end{cases},$$

$$\begin{cases} i_{dfed} = (i_u \times \cos\theta + i_v \times \cos(\theta - \frac{2}{3}\pi) + i_w \times \cos(\theta + \frac{2}{3}\pi)) \times \frac{2}{3} \\ i_{qfed} = (-i_u \times \sin\theta + i_v \times \sin(\theta - \frac{2}{3}\pi) + i_w \times \sin(\theta + \frac{2}{3}\pi)) \times \frac{2}{3}, \end{cases}$$

among them, $R_s$ is motor phase resistance, $w_e$ is motor electrical angular frequency, $i_q$ is motor q-axis current, $L_d$ is motor d-axis inductance, $L_q$ is motor q-axis inductance, $\varphi_f$ is permanent magnet rotor magnetic flux, $U_{lim}$ is voltage circle limit value, $T_e$ is motor demand output torque, $p_n$ is number of motor poles, $I_d$ is motor d-axis current, $i_u$ is motor U-phase collected current, $i_v$ is motor V-phase collected current, $i_w$ is motor W-phase collected current, and $\theta$ is rotor electrical angle.

3. The method of achieving motor control in an open-phase condition of claim 1, wherein formulas for calculating the d-axis demand current $i_{dref}$, the q-axis demand current $i_{qref}$, and the demand phase current $i_{sref}$ of the motor are :

$$\begin{cases} i_{dref} = i_{qref} \times \tan\theta \\ i_{qref} = i_{qref} \\ i_{sref} = i_{dref} \times \cos(\theta + \frac{2}{3}\pi) - i_{qref} \times \sin(\theta + \frac{2}{3}\pi) \end{cases}, \text{ among them, } \theta \text{ is rotor electrical}$$

angle.

4. The method of achieving motor control in an open-phase condition of claim 1, wherein formulas for calculating the present d-axis demand current $i_{dref}$ and q-axis demand current $i_{qref}$ are :

$$\begin{cases} i_{qref} = \frac{2}{3} \times \frac{i_{smax}^2}{i_{qref}} \times (1 + \cos(2\theta)) \\ i_{dref} = \frac{2}{3} \times \frac{i_{smax}^2}{i_{qref}} \times \sin(2\theta) \end{cases}, \text{ among them, } i_{smax} \text{ is maximum value of motor phase}$$

current, $\theta$ is rotor electrical angle.

5. The method of achieving motor control in an open-phase condition of claim 1, wherein formulas for calculating the d-axis reference voltage $U_{dref}$ and the q-axis reference voltage $i_{qref}$ are :

$$\begin{cases} U_{dref} = K_{pd} \times (I_{dref} - I_{dfed}) + \int K_{id} \times (I_{dref} - I_{dfed}) \\ U_{qref} = K_{pq} \times (I_{qref} - I_{qfed}) + \int K_{iq} \times (I_{qref} - I_{qfed}) \end{cases}$$ , among them, $K_{pd}$ is d-axis scaling coefficient, $K_{id}$ is d-axis integration coefficient, $K_{pq}$ is q-axis scaling coefficient, $K_{iq}$ is q-axis integration coefficient.

6.  The method of achieving motor control in an open-phase condition of claim 1, wherein formulas for calculating the alpha axis reference voltage and beta axis reference voltage are:

$$\begin{cases} U_{\alpha ref} = U_{dref} \times cos\,\theta - U_{qref} \times sin\,\theta \\ U_{\beta ref} = U_{dref} \times sin\,\theta + U_{qref} \times cos\,\theta \end{cases}$$ , among them, $\theta$ is rotor electrical angle.

7.  The method of achieving motor control in an open-phase condition of claim 1, wherein formulas for calculating the U-phase duty cycle *DutyU*, the V-phase duty cycle *DutyV*, and the W-phase duty *cycle DutyW* are

$$\begin{cases} U_U = U_{\alpha ref} \\ U_V = -\dfrac{U_{\alpha ref}}{2} + \dfrac{\sqrt{3}}{2} \times U_{\beta ref} \\ U_W = -\dfrac{U_{\alpha ref}}{2} - \dfrac{\sqrt{3}}{2} \times U_{\beta ref} \\ U_{com} = \dfrac{max(U_U,U_V,U_W)+min(U_U,U_V,U_W)}{2} \end{cases} , \quad \begin{cases} DutyU = \dfrac{U_U-U_{com}}{U_{max}} + 0.5 \\ DutyV = \dfrac{U_V-U_{com}}{U_{max}} + 0.5 \\ DutyW = \dfrac{U_W-U_{com}}{U_{max}} + 0.5 \end{cases}$$ , among them, $U_{max}$ is maximum value of the voltage vector.

Figure 1

Figure 2

Figure 3

## INTERNATIONAL SEARCH REPORT

| International application No. |
|---|
| **PCT/CN2022/116211** |

**A.  CLASSIFICATION OF SUBJECT MATTER**

H02P 29/024(2016.01)i;  H02P 21/00(2016.01)i;  H02P 29/028(2016.01)i

According to International Patent Classification (IPC) or to both national classification and IPC

**B.  FIELDS SEARCHED**

Minimum documentation searched (classification system followed by classification symbols)

H02P

Documentation searched other than minimum documentation to the extent that such documents are included in the fields searched

Electronic data base consulted during the international search (name of data base and, where practicable, search terms used)

CNTXT; SIPOABS; DWPI; USTXT; CNKI; IEEE: 缺相, 断相, 开路, 断路, 故障, 容错, 电机, 电动机, 马达, 矢量, d轴, q轴, 交轴, 直轴, 最大, 给定, 命令, 指令, phase deficiency, phase break, open circuit, circuit breaking, fault, fault tolerance, motor, electric machine, vector, d axis, q axis, max.reference, command, instruction

**C.  DOCUMENTS CONSIDERED TO BE RELEVANT**

| Category* | Citation of document, with indication, where appropriate, of the relevant passages | Relevant to claim No. |
|---|---|---|
| A | CN 108614164 A (SHANGHAI DAJUN TECHNOLOGIES, INC.) 02 October 2018 (2018-10-02)<br>        description, paragraphs [0006]-[0007], and figures 1-2 | 1-7 |
| A | CN 109428525 A (TIANJIN POLYTECHNIC UNIVERSITY) 05 March 2019 (2019-03-05)<br>        entire document | 1-7 |
| A | US 2017244344 A1 (CASP-N CANADIAN SPACE AGENC) 24 August 2017 (2017-08-24)<br>        entire document | 1-7 |
| A | CN 111404447 A (WEIHAI OCEAN VOCATIONAL COLLEGE et al.) 10 July 2020 (2020-07-10)<br>        entire document | 1-7 |

☐ Further documents are listed in the continuation of Box C.  ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **12 October 2022** | **23 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

| International application No. |
| --- |
| **PCT/CN2022/116211** |

| Patent document cited in search report | | | Publication date (day/month/year) | Patent family member(s) | | | Publication date (day/month/year) |
| --- | --- | --- | --- | --- | --- | --- | --- |
| CN | 108614164 | A | 02 October 2018 | CN | 108614164 | B | 01 October 2021 |
| CN | 109428525 | A | 05 March 2019 | CN | 109428525 | B | 26 October 2021 |
| US | 2017244344 | A1 | 24 August 2017 | WO | 2017143434 | A1 | 31 August 2017 |
| CN | 111404447 | A | 10 July 2020 | AU | 2021100355 | A4 | 15 April 2021 |
| | | | | CN | 111404447 | B | 19 November 2021 |

Form PCT/ISA/210 (patent family annex) (January 2015)

**REFERENCES CITED IN THE DESCRIPTION**

**Patent documents cited in the description**

- CN 202111047204